Europäisches Patentamt

**European Patent Office**

Office européen des brevets

(19)

(11) Publication number: **0 031 851**
**B1**

(12) # EUROPEAN PATENT SPECIFICATION

(45) Date of publication of patent specification: **20.06.84**

(51) Int. Cl.³: **G 05 D 7/03, G 01 F 1/30**

(21) Application number: **79900890.9**

(22) Date of filing: **12.07.79**

(86) International application number:
**PCT/JP79/00186**

(87) International publication number:
**WO 81/00312 05.02.81 Gazette 81/4**

(54) **CONSTANT FLOW RATE SUPPLYING DEVICE.**

(43) Date of publication of application:
**15.07.81 Bulletin 81/28**

(45) Publication of the grant of the patent:
**20.06.84 Bulletin 84/25**

(84) Designated Contracting States:
**FR**

(56) References cited:
**JP - B - 41 013 205**
**JP - Y - 40 012 675**
**SU - A - 564 453**
**US - A - 2 872 073**
**US - A - 2 947 286**
**US - A - 3 285 139**
**US - A - 3 954 416**

**OELHYDRUALIK UND PNEUMATIK, vol. 13, no. 1, January 1969, Mainz, DE C.R. HIMMLER: "Vergleich zwischen dem Verhalten von Servoventilen mit fluidischem und elektrischem Eingang" pages 5-8**

(73) Proprietor: **SANKYO DENGYO CO., LTD.**
**8-11, Chuocho, 1-chome**
**Meguro-ku Tokyo 152 (JP)**

(72) Inventor: **TOMIYASU, Hiroshi**
**1028-10-1016, Kaminakazatocho Isogo-ku**
**Yokohama-shi, Kanagawa 235 (JP)**
Inventor: **TANAKA, Hiroaki**
**Tanaka-Haimu 102 27-30, Tsuchihashi 3-chome**
**Takatsu-ku Kawasaki-shi, Kanagawa 213 (JP)**

(74) Representative: **Bouju, André**
**38 Avenue de la Grande Armée**
**F-75017 Paris (FR)**

## Description

Background of the invention

The present invention relates to a constant flow rate supplying device of powder or liquid in accordance with the preamble of the claim.

US—A—2 872 073 discloses such a device where powder or liquid falls down with gravity from a certain height onto a grid made of parallel elongated impact plates. The impact grid carries a flapper and is movable along such a horizontal direction that the flapper more or less closes a pneumatic exhaust nozzle. A spring urges the grid towards a position in which the nozzle is closed, while the impact load on the grid has the contrary effect. The flow towards the grid is controlled by a gate member actuated by pneumatic cylinder supplied with the back pressure of the nozzle and arranged so as to open the gate member when the said back pressure is low.

Such a device has the advantage of being cheap to produce, and also cheap to use in combination with an often already existing installation producing compressed air.

Such installations are arranged for producing air to be used as a source of energy and therefore it is not considered as essential that the pressure thereof be very constant. Accordingly, when such compressed air is used for flow regulation, the flow is subjected to variations which are generated by variations in the pressure of the supplied compressed air.

US—A—3 054 416 discloses a primary stage for a two stage hydraulic distributor which is to be controlled by two electric currents which are intended to have contrary effects on a switching valve. In this case, a flapper is placed between two nozzles, the back pressure of each of them being transmitted to one respective side of a piston of the switching valve which in turn distributes fluid towards a receiver. The fluid escaping through the nozzles may be at low pressure and thus be cheap while the actuating fluid, distributed by the switching valve, may be at a much higher desired pressure. The flapper is rotatably coupled to a pair of opposite blades each of which protrudes in a respective air gap of a common magnetic circuit. Each of the opposite blades is surrounded by a winding which is supplied with one of the said currents. Spring means urges the flapper in the middle position between the nozzles.

In such a system, two input variables act upon the system and the reactions of the system in both directions are to be of identical extent for inputs (currents) of identical extent. Only a two nozzles system with double effect cylinder can result therein.

US—A—3 285 139 discloses a follower system in which an output lever is to be set in a position corresponding to that of an input lever on which only small effort is applied. The input lever is connected to a flapper means including two flappers mounted symmetrically with respect to a plane perpendicular to a translational displacement direction of the flapper means. The flappers are at a certain predetermine oblique angle to said direction. Each flapper faces an exhaust nozzle connectd to one end of an actuating cylinder in which a piston is movable.

Again, in such a context, the input may have two directions and a double effect system is compulsory to provide efficient and identical reactions in both directions.

The need of this does not appear to the man skilled in the art as far as a constant flow rate supplying device is concerned since in such a device the input applied to the flapper means is an effort having always the same direction and there is no need of bidirectional operation with symmetrical reactions. It is only necessary to find a flow rate in which the impact plate is in a balance position corresponding to a balance position of the gate member, and, as shown by US—A—2 872 073, a single effect device suffices thereto.

Summary of the invention

The object of the invention is to overcome the drawback of US—A—2 872 073 by making it less dependant upon variations in the pressure of the supplied compressed air.

The object is fulfilled by a constant flow rate supplying device in accordance with the characterizing part of the claim. Some of the features of the characterizing part of the claim are known per se from US—A—3 054 416, the other features of the characterizing part of the claim are known per se from US—A—3 285 139, the invention consisting in applying the teaching of these two documents to the general teaching of US—A—2 872 073.

The position of the double flapper means is the result of the comparison between the load on the impact plate and the biasing load of the spring. The two flappers are at the same distance of their respective nozzle when the impact load corresponds to the desired flow.

The respective back-pressures in the nozzles depend on the position of the flapper-means. The back-pressures are compared in the circuit-switching valve, and the opening of the gate is controlled by the air cylinder according to the position of the circuit switching valve. Thus, the value of the flow for which the circuit switching-valve is in a balance position in which the air cylinder does not move the gate is independant from the pressure of the supplied compressed air.

Brief description of drawings

The invention is illustrated for example in the accompanying drawings which form part of this application and in which;

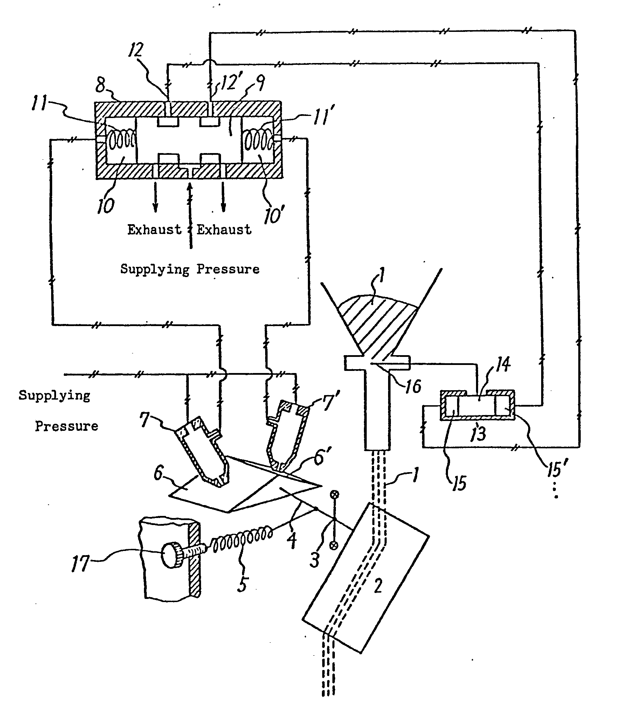

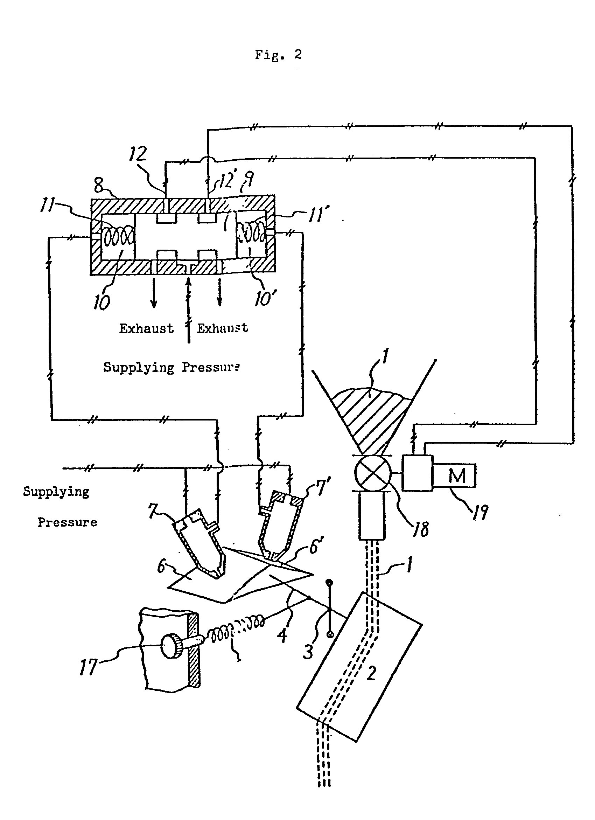

Figures 1 and 2 are two configuration diagrams of the constant flow rate supplying device according to the present invention.

## Description of preferred embodiments

Preferred embodiment of the present invention will now be described with reference to the accompanying drawings.

Referring to Figure 1, the impact load produced as a material to be measured 1 hits an inclined impact plate 2 is taken out as a horizontal displacement by means of a shaft 4 and a spring 5 fixing the impact plate 2 across a fulcrum 3. The shaft 4 has mounted thereon two flappers 6, 6' symmetrically with respect to the vertical plane including the shaft 4 and the fulcrum 3 at an predetermined oblique angle to the diretion of displacement respectively. Opposed to the flappers are provided nozzles 7, 7' mounted on the fixed part. The back pressures of the nozzle flapper arrangements obtainable through the gap between the flapper and the nozzle are connected to a control chambers 10, 10' respectively at the ends of a piston 9 of a pneumatic circuit-switching valve 8. Here, the piston 9 is balanced by springs 11, 11' so that when the back pressures of the nozzle flapper arrangements is equal to the pressure in the control chambers 10, 10', no switching of the pneumatic pressure circuit is made. When a difference is produced between the back pressures of the nozzle flapper arrangements, the piston 9 is caused to move so that the pneumatic pressure circuit is switched. Then, one of the output pressures of the output ports 12, 12' increases, and the other decreases as air is exhausted. By connecting these output pressures to control chambers 15, 15' at the ends of a piston 14 of an air cylinder 13 respectively, it is enabled to change the stroke of the piston 14 to control the opening of the gate 16 and maintain the flow rate at a constant value. Flow rate setting is made by changing the thrust of a set screw 17 pressing the spring 5 against the shaft 4 or translating the nozzle 7, 7' in the direction of displacement of the flappers 6, 6'. Further, as shown in Figure 2, the constant flow rate supplying device may be constructed by using, in the supplying machine 18, a motor the speed of which is changeable by the pneumatic pressure signal, and such configuration is effective for powder or liquid the flow of which is not controllable by the gate opening. The foregoing construction offers an advantageous effect that it is enable to construct a highly accurate constant flow rate supplying device having the advantages of the pneumatic instrument such as simple structure, low cost, easy operation and adjustment, explosion proofness, and being free from the influence of the pressure variation in the supplying pressure on account of the two sets of nozzle flapper mechanisms.

Explanation of numerals used in the drawings

1 — Material to be measured
2 — Impact plate
3 — Fulcrum
4 — Beam
5 — Spring
6, 6' — Flapper
7, 7' — Nozzle
8 — Pneumatic circuit-switching valve
9 — Piston
10, 10' — Control chamber
11, 11' — Spring
12, 12' — Output port
13 — Air cylinder
14 — Piston of air cylinder
15, 15' — Control chamber of air cylinder
16 — Gate
17 — Set screw
18 — Supplying machine
19 — Variable speed motor

## Claim

A constant flow rate supplying device, comprising an impact type flowmeter where powder or liquid (1) falls down with gravity from a certain height onto an impact plate (2), the impact load exerted on the impact plate (2) being taken out by a spring (5) as a horizontal displacement, the device including flapper means (6, 6') secured to the plate (2) by a shaft (4) and movable in front of nozzle means (7, 7') supplied with pressurised air and providing a back-pressure to control the position of a piston (14) in a pneumatic cylinder (13), thereby, by altering the position of the piston, a valve (16) or the speed of a motor (19) in the supplying device and thus controlling the flow rate of the falling powder or liquid, characterized in that the flapper means include two surfaces (6, 6') mounted on the shaft (4) and symmetrically with respect to the vertical plane which passes through the shaft (4) and the fulcrum (3) and at a certain predetermined oblique angle to the direction of displacement, and in that the nozzle means include two nozzles (7, 7') facing the two surfaces of the flappers (6, 6') respectively and in that the respective back pressures derived from the two combinations of the nozzles (7, 7') and flapper surfaces (6, 6') are connected to a pneumatic circuit-switching valve (8) to control the position of the piston in the pneumatic cylinder (13) by means of the output pressure of the pneumatic circuit-switching valve (8), the pneumatic cylinder (13) having two control chambers, one at each end of the piston (15, 15').

## Patentanspruch

Vorrichtung zur Lieferung einer konstanten Strömungsmenge mit einem Schüttstrommesser, bei welchem ein Pulver oder eine Flüssigkeit (1) unter der Wirkung der Schwerkraft aus einer bestimmten Höhe auf eine Stoßplatte (2) fällt und die auf die Stoßplatte (2) ausgeübte Stoßkraft mittels einer Feder (5) als horizontale Verstellung abgenommen wird, wobei die Vorrichtung eine Prallplatten-Einrichtung (6, 6') enthält, die durch eine Stange (4) an der Stoßplatte (2) befestigt und vor einer Düsen-Einrichtung (7, 7') beweglich ist, die mit Druckluft versorgt wird und einen Gegendruck erzeugt, um die Stellung eines Kolbens (14) in einem pneumatischen Zylinder (13) und somit, durch Änderung der Kolbenstellung, ein Ventil (16) oder die Drehzahl eines Motors (19) in der Liefervorrichtung zu zteuern und dadurch die Strömungsmenge des fallenden Pulvers oder der fallenden Flüssigkeit zu regeln, dadurch gekennzeichnet, daß die Prallplatten-Einrichtung zwei Flächen (6, 6') aufweist, die an der Stange (4) symmetrisch in bezug auf die durch die Stange (4) und den Drehpunkt (3) gehende vertikale Ebene in einem vorbestimmten Neigungswinkel zur Verstellrichtung befestigt sind, daß die Düsen-Einrichtung zwei Düsen (7, 7') enthält, die jeweils einer der beiden Prallplatten-Flächen (6, 6') zugewandt sind, und daß die jeweiligen Gegendrücke, die von den beiden Kombinationen von Düsen (7, 7') und Prallplatten-Flächen (6, 6') abgeleitet werden, an ein pneumatisches Schaltventil (8) angelegt werden, um die Stellung des Kolbens in dem pneumatischen Zylinder (13) durch den Ausgangsdruck des pneumatischen Schaltventils (8) zu steuern, wobei der pneumatische Zylinder (13) zwei Steuerkammern (15, 15'), nämlich eine an jedem Ende des Kolbens (14) hat.

**Revendication**

Dispositif d'alimentation à débit constant, comprenant un débitmètre du type impact où de la poudre ou du liquide (1) tombe d'une certaine hauteur sous l'effet de la pesanteur sur une plaque d'impact (2), la force d'impact exercée sur la plaque d'impact (2) étant traduite par un ressort (5) en un déplacement horizontal, le dispositif incluant des mécanismes à volet (6, 6') fixés à la plaque (2) par un arbre (4) et mobiles en face de moyens à ajutage (7, 7') alimentés en air comprimé et fournissant une contre-pression pour commander la position d'un piston (14) dans un cylindre pneumatique (13), par lequel, en modifiant la position du piston, on commande une vanne (16) ou la vitesse d'un moteur (19) dans le dispositif d'alimentation, et ainsi on commande le débit de la poudre ou du liquide qui tombe, caractérisé en ce que le mécanisme à volet inclut deux surfaces (6, 6') montées sur l'arbre (4) et ceci symétriquement par rapport au plan vertical qui passe par l'arbre (4) et le pivot (3) et inclinées d'un certain angle prédéterminé par rapport à la direction du déplacement, en ce que les moyens à ajutage comprennent deux ajutages (7, 7') qui font face aux deux surfaces des volets (6, 6') respectivement, et en ce que les contre-pressions rspectives provenant des deux combinaisons d'ajutages (7, 7') et de surfaces de volets (6, 6') sont reliées à une vanne de commutation de circuit pneumatique (8) pour commander la position du piston dans le cylindre pneumatique (13) au moyen de la pression de sortie de la vanne de commutation du circuit pneumatique (8), le cylindre pneumatique (13) ayant deux chambres de commande, une à chaque extrémité du piston (15, 15').

Exhaust   Exhaust

Supplying Pressure

Supplying

Pressure

Fig. 2

Exhaust    Exhaust

Supplying Pressure

Supplying

Pressure

M